# DEMANDE DE BREVET EUROPEEN

(11) **EP 1 458 174 A1**
(43) Date de publication de la demande: **15.09.2004**
(21) Numéro de dépôt: 03008976.7
(22) Date de dépôt: 17.04.2003
(51) Int. Cl.: H04M 17/00, H04M 15/00, H04L 12/28, H04L 12/56, H04L 12/14

(54) **Système d'accès à Internet public sans fil**

(30) Priorité: 08.03.2003 EP 03005204
(71) Demandeur: IPM International SA, 1211 Genève 16 (CH)
(72) Inventeur: Michaud, Alain, Pitegny, 01170 Gex (FR); Candolfi, Philippe, 1233 Bernex (CH); Langlois, Philippe, 1202 Geneve (CH)
(74) Mandataire: Wenger, Joel-Théophile

(57) **Abrégé**

La présente invention propose un système et une méthode permettant à un utilisateur d'accéder à Internet avec son ordinateur portable en établissant une connexion sans fil du type Wi-Fi avec un point d'accès public.

Le point d'accès public est inclus dans un publiphone autorisant l'accès à Internet contre un moyen de comptabilisation consistant soit en un pré-payement par carte ou par pièces de monnaie, soit en un paiement ultérieur basé sur un abonnement que l'utilisateur a conclu auprès d'un opérateur gérant les publiphones.

## Description

La présente invention concerne le domaine des systèmes d'accès à Internet publics sans fil utilisant des appareils émetteurs/récepteurs connectés à un réseau de télécommunication fixe.

Les systèmes d'accès sans fil connus sont composés d'un ensemble d'appareils émetteur / récepteur constituant autant de points d'accès répartis dans des lieux tel que des centres commerciaux, des hôtels, des expositions, des centres de congrès, des gares, des aéroports des parkings ou des parcs publics. Un utilisateur équipé d'un ordinateur portable peut établir une connexion sans fil avec un point d'accès quelconque grâce à une interface appropriée incluse dans l'ordinateur. Le point d'accès se connecte ensuite à des serveurs Internet via le réseau de télécommunication fixe auquel il est relié, ainsi l'ordinateur portable de l'utilisateur est connecté à Internet sans être relié à un câble.

Le mode de connexion sans fil utilisé entre le point d'accès et l'ordinateur portable est en général du type Wi-Fi (Wireless Fidelity) défini selon la norme IEEE 802.11.x.

Les ordinateurs ou PC (Personal Computer) portables équipés d'interfaces Wi-Fi peuvent échanger des données par voie hertzienne avec un point d'accès, appelé aussi "hotspot", et ceci dans une zone située dans un rayon d'environ 100 mètres dudit point d'accès.

Pour se connecter à l'un de ces points d'accès publics sans fil, l'utilisateur doit disposer d'un abonnement ou être enregistré auprès d'un opérateur de télécommunication qui lui procure un compte avec un nom d'utilisateur accompagné d'un mot de passe. Le point d'accès émet en permanence un signal qui sera détecté par tous les ordinateurs portables se trouvant dans une zone délimitée par la portée de l'émission. L'utilisateur lance un programme de navigation Internet, sélectionne l'identificateur émis par le point d'accès affiché sur l'écran de l'ordinateur puis établit la connexion en introduisant son nom et un mot de passe. La connexion sans fil ainsi réalisée permet un accès à Internet via le réseau de télécommunication auquel est relié le point d'accès sélectionné. La facturation est effectuée par l'opérateur en fonction de la durée de connexion périodiquement de manière analogue à celle des communications téléphoniques privées standards. Dans un lieu donné, un ordinateur portable peut se trouver dans le rayon d'action de plusieurs points d'accès. Dans ce cas, plusieurs identificateurs s'affichent sur l'écran de l'ordinateur et l'utilisateur choisira par exemple le point d'accès le plus proche qui lui garantira une connexion stable.

Le but de la présente invention est de proposer un système permettant un accès public sans fil à Internet en utilisant un réseau d'appareils de connexion existants pouvant fonctionner comme points d'accès.

Un autre but est de fournir une connexion sans fil avec un ordinateur portable d'un utilisateur quelconque sans que celui-ci doive s'abonner chez un fournisseur d'accès.

Ces buts sont atteints par un système d'accès sans fil public à Internet comprenant au moins un point d'accès constitué d'un appareil émetteur / récepteur relié à un réseau fixe de télécommunication, ledit appareil échange des signaux numériques par voie hertzienne avec au moins un ordinateur portable distant comportant une interface et un logiciel de connexion sans fil, caractérisé en ce que le point d'accès est inclus dans un téléphone public ou publiphone autorisant l'accès à Internet contre un moyen de comptabilisation, ledit ordinateur se connectant à Internet via les moyens de connexion au réseau fixe du publiphone.

Un publiphone est un appareil téléphonique installé dans des lieux accessibles au public servant à établir des communications téléphoniques vocales sur le réseau fixe en utilisant un moyen de comptabilisation soit sous forme à pré-paiement tel que des pièces de monnaie, des cartes prépayées, porte-monnaie électronique ou de crédit ou par le biais d'un abonnement reconnu par ce publiphone.

Les publiphones du système selon l'invention comprennent une unité centrale comportant des mémoires où sont stockés des logiciels de fonctionnement, un modem à haut débit de données, un dispositif de paiement, un clavier, un écran et une interface de connexion. L'unité centrale est reliée d'une part au modem connecté au réseau de télécommunication et d'autre part à l'écran, au clavier, et à l'interface de connexion.

Le système selon l'invention permet un accès aux services de l'Internet via un ordinateur portable ou un PDA (assistant numérique portable) pourvu d'une carte réseau de connexion sans fil. La fonction de base du publiphone, consistant à établir une liaison téléphonique vocale reste disponible même s'il est connecté à Internet et à l'ordinateur portable via la connexion sans fil. Autrement dit, le publiphone joue le rôle d'un relais entre l'ordinateur portable et le réseau fixe de télécommunication.

Afin d'éviter l'installation onéreuse de nouveaux réseaux d'appareils émetteurs/récepteurs Wi-Fi servant de points d'accès, il est avantageux de les intégrer dans les publiphones déjà installés car ceux-ci se trouvent déjà dans les mêmes lieux très fréquentés par le public tels que des gares, aéroports, hôtels, centres de conférences, expositions etc.

Un autre avantage réside en ce qu'un publiphone permet l'utilisation de plusieurs moyens de paiement des communications aux choix de l'utilisateur, que ce soit par abonnement ou par pré-paiement avec des pièces de monnaies ou avec des cartes. De plus, son boîtier particulièrement robuste, conçu en général pour être installé à l'extérieur, assure une protection efficace de l'interface de connexion sans fil contre des agressions dues à l'environnement et au vandalisme.

La présente invention concerne aussi une méthode de connexion d'un ordinateur portable d'un utilisateur, ledit ordinateur étant muni d'une interface de connexion sans fil, à un système d'accès public à Internet composé d'une pluralité de publiphones connectés à un réseau de télécommunication fixe comprenant chacun une unité centrale comportant des mémoires où sont stockés des logiciels de fonctionnement, un modem à haut débit de données, un dispositif de paiement, un clavier, un écran et une interface de connexion sans fil caractérisée par les étapes suivantes:
- sélection par l'utilisateur d'un publiphone appartenant au système d'accès public à Internet,
- activation du service de connexion sans fil,
- sélection et validation d'un identificateur parmi les identificateurs affichés reçus par le publiphone, ledit identificateur étant émis par l'ordinateur portable à connecter de l'utilisateur,
- sélection d'une prestation de connexion prédéterminée et comptabilisation correspondant à ladite prestation de connexion,
- connexion de l'ordinateur portable à Internet via le réseau de télécommunication fixe et la liaison sans fil préalablement établie avec le publiphone.

Par prestation on entend une manière de comptabiliser la connexion de l'ordinateur portable à Internet via le publiphone. Une telle connexion peut être facturée selon une durée prédéterminée ou selon le trafic de données prévu entre l'ordinateur portable et des serveurs Internet. Ce trafic consiste en la quantité de données échangées exprimée en Kilo-octets ou en Méga-octets quelle que soit la durée de connexion. Ces deux types de comptabilisation peuvent être combinés en imposant une certaine durée à un certain trafic. Par exemple, un choix peut se porter sur une connexion 60 minutes pour un trafic de 100 Méga-octets de données. Lorsqu'une des limites, soit temporelle, soit quantitative est atteinte, la connexion est interrompue.

Cette méthode de connexion présente l'avantage de ne pas nécessiter d'abonnement ou d'authentification par nom d'utilisateur et mot de passe pour établir une connexion à Internet. Seul un identificateur particulier à la connexion sans fil ou SSID (Service Set IDentifier) est indispensable pour distinguer différents réseaux Wi-Fi présents dans un même lieu. Cet identificateur permet à l'utilisateur de se connecter sur le réseau Wi-Fi géré par le téléphone public mais pas sur un autre réseau. Ainsi, n'importe quel utilisateur de passage vers un publiphone peut bénéficier d'un accès à Internet via le publiphone à condition d'introduire un moyen de paiement suffisant correspondant à une certaine prestation de connexion.

Selon la méthode de l'invention, l'utilisateur muni d'un ordinateur portable active d'abord le point d'accès qui reçoit ensuite un signal provenant de l'ordinateur. Ce n'est qu'après avoir sélectionné sur l'écran du publiphone l'identificateur émis par l'ordinateur portable et après avoir effectué un paiement, que l'utilisateur peut établir la connexion sans fil. Cette connexion est donc réalisée uniquement avec le publiphone choisi par l'utilisateur. Cela n'empêche pas que d'autres utilisateurs se servent du même publiphone pour se connecter car les signaux émis par plusieurs ordinateurs portables sont différenciés par leurs adresses TCP/IP (Transfer Control Protocol / Internet Protocol) .

L'invention et ses particularités seront mieux comprises grâce à la description détaillée qui va suivre et qui se base sur la figure annexée servant d'exemple nullement limitatif.

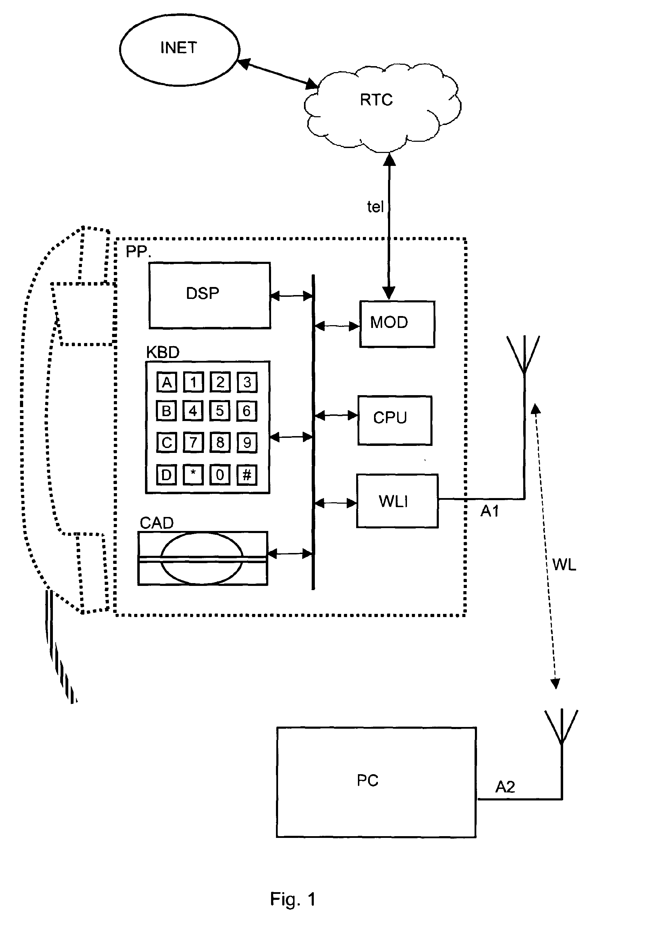

Le schéma bloc de la figure 1 représente l'ensemble des dispositifs contenus dans un publiphone faisant partie d'un système public d'accès à Internet.

Le publiphone (PP) comprend un écran (DSP), un clavier (KBD) numérique avec des touches de fonctions, un dispositif de paiement, par exemple sous forme d'un accepteur de cartes (CAD), une unité centrale (CPU), un modem à haut débit de données (MOD) et une interface de connexion sans fil (WLI). Tous ces dispositifs sont reliés entre eux. Le modem (MOD) est connecté à une ligne téléphonique (tel) du réseau de télécommunication commuté fixe (RTC). L'interface de connexion sans fil (WLI) comportant une antenne (A1) est chargée de recevoir et d'émettre des signaux numériques radiofréquences respectivement en provenance et à destination d'ordinateurs portables (PC) situés à une certaine distance du publiphone (PP). Ces ordinateurs (PC) doivent être munis d'une carte de connexion à un réseau sans fil et d'une antenne (A2).

Le service de connexion sans fil, une fois activé, permet à un utilisateur muni d'un ordinateur portable d'établir une connexion à Internet (INET) via la ligne téléphonique fixe à laquelle est branché le publiphone. Afin de maintenir la connexion sans fil (WL), l'ordinateur portable doit toujours se trouver dans une zone définie par les portées d'émission / réception de l'interface de connexion sans fil du publiphone et de la carte de connexion réseau sans fil de l'ordinateur portable. Dans le mode de connexion Wi-Fi, cette portée d'une centaine de mètres dépend de la puissance d'émission disponible et des obstacles pouvant se trouver entre le publiphone (PP) et l'ordinateur portable (PC). Le publiphone (PP) constitue ainsi un point d'accès (hotspot) tout en conservant sa fonctionnalité de base de pouvoir transmettre la voix.

Le modem (MOD) est de préférence, du type ADSL (Asymetric Digital Subscriber Line), permettant des débits de données élevés, c'est-à-dire au maximum de 8 Mbit/s dans le sens allant du central téléphonique vers le modem et de 1 Mbit/s dans le sens contraire. Selon une réalisation typique, le débit du modem s'élève à 512 Kbit/s dans les deux sens, ce qui est aussi supporté par la liaison sans fil Wi-Fi qui garantit un débit maximum de l'ordre de 10 Mbit/s. Globalement, une connexion à Internet depuis l'ordinateur portable peut donc s'effectuer à une vitesse de 512 Kbit/s.

Grâce au modem ADSL, les données numériques des ordinateurs portables transitent dans une bande de fréquences élevée et séparée de celle utilisée pour les conversations téléphoniques, ce qui permet une utilisation normale du publiphone même si celui-ci est en liaison avec un certain nombre d'ordinateurs portables. Le fait de décrocher et/ou raccrocher le combiné ou la numérotation n'ont aucune influence sur les connexions Internet en cours. Les fonctionnalités du publiphone qui consistent à transmettre vers le réseau téléphonique fixe la voix d'une part et des données numériques d'autre part sont donc indépendantes l'une de l'autre.

L'unité centrale (CPU) contenant les logiciels nécessaires au fonctionnement du publiphone gère l'ensemble des dispositifs du système y compris l'interface de connexion sans fil (WLI) capable d'assurer plusieurs connexions simultanées d'ordinateurs portables.

L'écran (DSP) est de préférence du type graphique à cristaux liquides (LCD) pouvant afficher plusieurs lignes de caractères alpha-numériques, notamment des identificateurs provenant d'ordinateurs portables détectés par l'interface de connexion sans fil (WLI). La recherche et la sélection de l'identificateur de l'ordinateur portable que l'utilisateur désire connecter est effectuée à l'aide de touches numériques du clavier auxquelles sont associées des fonctions de navigation et de validation. Par exemple, le défilement des données affichées sur l'écran vers le haut ou vers le bas et à gauche ou à droite s'effectue par exemple avec les touches numériques 2 ou 8 et 4 ou 6 respectivement, et la validation avec la touche #. Si l'équipement du téléphone public le permet, des touches dont l'action dépend du contexte (Soft Keys) peuvent être utilisées.

L'activation d'un point d'accès Wi-Fi d'un publiphone pour la connexion d'un ordinateur donné débute par la pression sur une touche de fonction du clavier du publiphone. Le récepteur de l'interface de connexion (WLI) détecte des identificateurs émis par des ordinateurs portables se trouvant à proximité du publiphone et affiche ceux-ci sur l'écran. L'utilisateur sélectionne et valide l'identificateur correspondant à celui de son ordinateur qui doit être préalablement mis en service. Il choisit une durée de connexion prédéterminée (15, 30, 60 minutes ou plus par exemple) parmi celles qui sont affichées sur l'écran. Un message d'invitation à introduire dans le dispositif de paiement du publiphone un montant correspondant à la durée choisie est ensuite affiché. L'utilisateur effectue le paiement au moyen d'une carte prépayée ou d'une carte de crédit qu'il insère dans l'accepteur de cartes ou encore au moyen de pièces qu'il introduit dans le monnayeur.

L'utilisateur peut ensuite s'éloigner du publiphone avec son ordinateur et exécuter un programme de navigation Internet approprié de la même manière que s'il était connecté à un réseau domestique traditionnel.

La connexion se termine soit manuellement par une commande spécifique envoyée par l'utilisateur depuis son ordinateur portable, soit automatiquement lorsque l'une ou l'autre des limites de la prestation (durée, quantité de données) préalablement choisies par l'utilisateur sont atteintes.

Une connexion terminée manuellement et avant qu'elle atteigne les limites imposées par la prestation (durée, quantité de données) peut être mémorisée durant une certaine période par le publiphone. Cette prestation ainsi suspendue pourra être recréditée au profit de l'utilisateur lors d'une prochaine connexion pour autant qu'elle soit établie pendant la période de mémorisation.

Il n'est d'ailleurs pas souhaitable de pouvoir couper une connexion depuis le publiphone car d'une part celui-ci ne se trouve plus sous le contrôle de l'utilisateur une fois la connexion sans fil établie et d'autre part les connexions doivent être protégées des malveillances d'autres utilisateurs.

Le publiphone agit comme un concentrateur de différentes liaisons sans fil établies par des ordinateurs vers le réseau téléphonique relié à des serveurs Internet. Chaque utilisateur peut bénéficier ainsi d'une connexion prépayée sans devoir s'abonner ou s'enregistrer auprès d'un opérateur de télécommunication.

Selon une variante de la méthode selon l'invention, un utilisateur peut disposer d'un abonnement reconnu par l'opérateur gérant un parc de publiphones. Dans ce cas, une identification et une authentification de l'abonné doivent être introduits sur le publiphone après l'activation du service de connexion sans fil. Ces opérations peuvent être effectuées par la lecture de la carte d'abonnement insérée dans le lecteur de cartes du publiphone suivie d'un numéro de code personnel introduit au moyen du clavier. Les prestations de la connexion (durée, trafic) ne doivent pas nécessairement être choisies préalablement car elles peuvent être évaluées lorsque l'utilisateur a terminé sa connexion. La facturation d'une telle connexion est effectuée ultérieurement par l'opérateur auprès duquel l'utilisateur est abonné.

Selon une autre variante, l'utilisateur dispose d'une carte d'abonnement spéciale "Connexion Wi-Fi" personnelle qu'il introduit dans le lecteur de carte du publiphone pour activer automatiquement le service de connexion sans fil.

Dans tous les cas l'ordinateur doit être préalablement mis en service afin qu'il puisse transmettre son identificateur au publiphone. Celui-ci l'affiche sur son écran pour permettre à l'utilisateur de le valider afin d'établir la connexion sans fil.

## Revendications

1. Système d'accès sans fil public à Internet comprenant au moins un point d'accès constitué d'un appareil émetteur / récepteur relié à un réseau fixe de télécommunication, ledit appareil échange des signaux numériques par voie hertzienne avec au moins un ordinateur portable distant comportant une interface et un logiciel de connexion sans fil, **caractérisé en ce que** le point d'accès est inclus dans un téléphone public ou publiphone autorisant l'accès à Internet contre un moyen de comptabilisation, ledit ordinateur se connectant à Internet via les moyens de connexion au réseau fixe du publiphone.

2. Système selon la revendication 1 dans lequel le publiphone comporte une unité centrale avec des mémoires où sont stockés des logiciels de fonctionnement, un dispositif de paiement, un clavier, un écran et une interface de connexion sans fil, **caractérisé en ce que** les moyens de connexion au réseau fixe comportent un modem à haut débit connecté à l'unité centrale et ladite unité centrale étant d'autre part connectée à l'écran, au clavier, et à l'interface de connexion sans fil.

3. Système selon les revendications 1 et 2 **caractérisé en ce que** le mode de connexion sans fil utilisé entre le publiphone et l'ordinateur portable est du type Wi-Fi (Wireless Fidelity) défini selon la norme IEEE 802.11.

4. Système selon la revendication 1, 2 ou 3, **caractérisé en ce que** les moyens de connexion au réseau fixe comportent un modem à haut débit de données du type ADSL.

5. Système selon la revendication 2 **caractérisé en ce que** l'écran du publiphone est du type graphique à cristaux liquides pouvant afficher plusieurs lignes de caractères alpha-numériques.

6. Système selon la revendication 2 **caractérisé en ce que** le clavier du publiphone comporte des touches numériques auxquelles sont associées des fonctions de navigation et de validation liées à l'affichage des données sur l'écran.

7. Système selon les revendications 2 à 6, **caractérisé en ce que** les moyens de communication vocale sont indépendants et opérationnels simultanément au fonctionnement des moyens de connexion au réseau fixe de télécommunication.

8. Méthode de connexion d'un ordinateur portable d'un utilisateur, ledit ordinateur étant muni d'une interface de connexion sans fil, à un système d'accès public à Internet composé d'une pluralité de publiphones connectés à un réseau de télécommunication fixe comprenant chacun une unité centrale comportant des mémoires où sont stockés des logiciels de fonctionnement, un modem à haut débit de données, un dispositif de paiement, un clavier, un écran et une interface de connexion sans fil **caractérisée par** les étapes suivantes:
• sélection par l'utilisateur d'un publiphone appartenant au système d'accès public à Internet,
• activation du service de connexion sans fil,
• sélection et validation d'un identificateur parmi les identificateurs affichés reçus par le publiphone, ledit identificateur étant émis par l'ordinateur portable à connecter de l'utilisateur,
• sélection d'une prestation de connexion prédéterminée et comptabilisation correspondant à ladite prestation de connexion,
• connexion de l'ordinateur portable à Internet via le réseau de télécommunication fixe et la liaison sans fil préalablement établie avec le publiphone.

9. Méthode selon la revendication 8 **caractérisée en ce que** le mode de connexion sans fil utilisé entre un publiphone et l'ordinateur portable est du type Wi-Fi (Wireless Fidelity) défini selon la norme IEEE 802.11.

10. Méthode selon les revendications 8 et 9 **caractérisée en ce que** la connexion entre un ordinateur portable et un publiphone est effectuée par la connexion sans fil Wi-Fi et **en ce que** la connexion du publiphone à Internet, via le réseau de télécommunication, est réalisée avec un modem du type ADSL.

11. Méthode selon la revendication 8 **caractérisée en ce que** la prestation de connexion représente une durée de connexion.

12. Méthode selon la revendication 8 **caractérisée en ce que** la prestation de connexion représente une quantité de données échangée entre l'ordinateur portable et Internet.

13. Méthode selon les revendications 8, 11 et 12 **caractérisée en ce que** la prestation de connexion représente une combinaison de la durée de connexion et de la quantité de données échangées.

14. Méthode selon la revendication 8 **caractérisée en ce que** l'identificateur émis par l'ordinateur portable de l'utilisateur est affiché sur un écran graphique ou alphanumérique à cristaux liquides du publiphone, ledit identificateur est sélectionné par l'utilisateur au moyen de touches numériques du clavier du publiphone auxquelles sont associées des fonctions de navigation et de validation.

15. Méthode selon la revendication 8 **caractérisée en ce que** la comptabilisation de la connexion est effectuée au moyen d'une carte prépayée ou de crédit ou de pièces de monnaie introduit dans le dispositif de paiement du publiphone.

16. Méthode selon la revendication 8 **caractérisée en ce que** la comptabilisation de la connexion est effectuée après identification et authentification de l'utilisateur sur le publiphone, le paiement étant effectué ultérieurement à la fourniture de la prestation à l'utilisateur, sur la base d'un abonnement obtenu auprès d'un opérateur gérant les publiphones.

17. Méthode selon les revendications 8 à 16 **caractérisée en ce que** l'utilisateur effectue après pré-paiement ou après identification et authentification, une connexion à distance sans fil du type Wi-Fi de son ordinateur portable au publiphone en exécutant un programme de navigation approprié sur l'ordinateur, ledit publiphone se connectant à Internet via le réseau téléphonique fixe au moyen du modem ADSL.

18. Méthode selon les revendications 8 à 17, **caractérisée en ce que** la connexion sans fil de l'ordinateur portable au publiphone est terminée soit manuellement au moyen d'une commande spécifique envoyée par l'utilisateur depuis son ordinateur portable, soit automatiquement lorsque la prestation préalablement choisie par l'utilisateur atteint ses limites.

19. Méthode selon les revendications 8 à 18, **caractérisée en ce qu'**une connexion terminée manuellement et avant d'avoir atteint les limites imposées par la prestation est mémorisée durant une certaine période par le publiphone, ladite prestation pouvant être re-créditée au profit de l'utilisateur lors d'une prochaine connexion pendant la période de mémorisation.
